# EUROPÄISCHE PATENTSCHRIFT

(11) **EP 1 028 147 B1**
(45) Veröffentlichungstag und Bekanntmachung des Hinweises auf die Patenterteilung: **07.07.2004**
(21) Anmeldenummer: 00101639.3
(22) Anmeldetag: 31.01.2000
(51) Int. Cl.: C09D 5/00, C09D 7/12, B05D 3/06, B41M 5/00, B65D 1/26

(54) **Beschichtetes Bandmaterial, Behälter aus beschichtetem Bandmaterial und Verfahren zu dessen Herstellung**
Coated strip material, container from the same and its method of manufacture
Matériau en bande revêtu, récipient fabriqué à partir de ce matériau et son procédé de fabrication

(30) Priorität: 10.02.1999 DE 19905523
(43) Veröffentlichungstag der Anmeldung: 16.08.2000
(73) Patentinhaber: ALCAN DEUTSCHLAND GMBH, D-37075 Göttingen (DE)
(72) Erfinder: Meykranz, Friedhelm, 58515 Lüdenscheid (DE)
(74) Vertreter: HOFFMANN - EITLE

(56) Entgegenhaltungen:
- DE-C- 4 307 766
- US-A- 5 254 395
- US-A- 5 256 453
- US-A- 5 271 968

## Beschreibung

### Technisches Gebiet

Sterilisierte Nahrungsprodukte, wie beispielsweise Tiernahrung, werden häufig in halbstarren Metallbehältern, wie beispielsweise Aluminiumbehältern, verpackt angeboten. Diese Behälter bestehen aus einem tiefgezogenen Behälterunterteil und einem darauf durch Randversiegelung aufgebrachten Deckel.

Das Bandmaterial für die Deckel bzw. die Behälterunterteile wird noch vor dem Ausstanzen, Tiefziehen und dem weiteren Prozeßdurchlauf der Behälterbefüllung, Versiegelung und Sterilisierung lackiert und mit Verbraucherinformationen und werbewirksamen Designelementen bedruckt, die dann auf den Verpackungsbehältern zur Geltung kommen. Die Lacke und Druckfarben müssen daher eine ausreichende Haftfestigkeit, Verformungsbeständigkeit und Temperaturbeständigkeit aufweisen, um den Prozeßdurchlauf unbeschadet zu übersehen. Für die Sterilisierung ist eine Hitzebeständigkeit von 131°C, im Siegelbereich ist eine Hitzebeständigkeit von bis zu 310°C gefordert.

### Stand der Technik

Bei der Herstellung herkömmlicher Verpackungsbehälter aus Aluminium wird das Bandmaterial für Deckel und Behälterunterteil zunächst mit einem Einbrennlack als Grundlack beschichtet, der bei Temperaturen von ungefähr 230° (Objekttemperatur) eingebrannt wird. Auf diese Weise können die geforderten Hitzebeständigkeiten erreicht werden. Anschließend wird das Band mit Verbraucherinformationen bzw. Designelementen bedruckt. Dabei werden entweder Zweikomponentendruckfarben ohne Überlackierung oder Einkomponentendruckfarben mit Überlackierung im Tiefdruckverfahren verwendet. Alternativ kann statt des Einbrennlackes auch ein Zweikomponentenlack verwendet werden. In beiden Fällen ist jedoch zur Erreichung der vollen Hitze- und Sterilisierbeständigkeit der Druckfarbe eine Wärmebehandlung des bedruckten Bandmaterials über einen Zeitraum von zwei bis sieben Tagen bei Temperaturen zwischen 40 und 100°C erforderlich. Die Druckfarben und Lacke weisen erst danach eine ausreichende Elastizität auf, um den Tiefziehvorgang für die Herstellung des Behälterunterteils ohne Schädigung und Farbveränderung zu überstehen.

Durch die mehrtägige Wärmebehandlung des bedruckten Bandmaterials entstehen sehr lange Fertigungszeiten für derartige Verpackungsbehälter. Auch die Druckformherstellung ist kostenintensiv und langwierig. Dadurch weist der gesamte Herstellungsprozeß eine geringe Flexibilität auf, so daß eine wirtschaftliche Fertigung nur in großen Fertigungslosen möglich ist.

Im sogenannten UV-Druckverfahren (bekannte, dafür angewendete Druckverfahren sind z.B. Flexo-, Offset- und Tiefdrucke) werden Druckfarben und Lacke verwendet, die unmittelbar nach dem Druckvorgang durch Einwirkung von UV-Strahlen aushärten. Bei derartigen Lackbedruckungen entfallen die Aushärtungs- und Wärmebehandlungszeiten, wodurch deutlich verkürzte Fertigungszeiten möglich werden.

Aus der DE 43 07 766 C1 ist eine kationisch härtende UV-Druckfarbe auf Diepoxidbasis bekannt. Zur Erhöhung der Reaktivität der kationisch härtenden Komponente enthält die UV-Druckfarbe einen Zusatz von Celluloseacetobutyrat in einer Menge von 0,5 bis 3 Gew.-%. Diese UV-Druckfarbe besitzt eine hohe Härtungsgeschwindigkeit, Heißsiegelfähigkeit und Lebensmittelverträglichkeit.

Aus der US 5 271 968 ist ebenfalls ein UV-härtender Lack bekannt, der ungefähr 9% Celluloseacetobutyrat enthält. Dieser Lack kann zur Beschichtung auf ein polymerisches Substrat aufgetragen werden, wobei er auf eine Temperatur von 30 bis 65°C erwärmt wird. Dadurch dringt die Lacksubstanz in die Oberfläche des polymerischen Substrats ein. Anschließend wird der Lack mit UV-Strahlen ausgehärtet. Aufgrund dieser Penetrationsschicht erhält der Lack bei der UV-Aushärtung eine besserte Haftung auf dem polymerischen Substrat.

Für das Bedrucken von Verpackungsbehältern der oben beschriebenen Art eignen sich die bisher bekannten UV-Druckfarben in der Praxis nicht, da mit ihnen keine ausreichende Haftfestigkeit zwischen der Druckfarbe und den verwendeten Einbrennlacken erreicht werden kann.

### Darstellung der Erfindung

Der Erfindung liegt das technische Problem zugrunde, ein beschichtetes Bandmaterial, insbesondere für die Behälterfertigung, sowie einen Behälter aus beschichtetem sterilisier- und siegelfähigem Bandmaterial bereitzustellen, wodurch eine Fertigung mit großer Flexibilität, kurzen Fertigungszeiten und dadurch geringen Kosten ermöglicht werden sollen. Dabei wird unter Behälter ein tiefgezogenes Behälterunterteil, das mit einem Deckel aus Bandmaterial verschlossen ist, verstanden.

Das der Erfindung zugrundeliegende technische Problem wird durch ein Bandmaterial nach Anspruch 1, einen Behälter nach Anspruch 9 und ein Verfahren nach Anspruch 11 gelöst.

Der Erfindung liegt der Gedanke zugrunde, für die partielle oder vollflächige Bedruckung von mit einem Einbrennlack als Grundlack vorbeschichteten Bandmaterial, wie es beispielsweise in der Behälterfertigung verwendet wird, UV-Druckfarben zu verwenden, die z.B. im Offset- oder Flexodruckverfahren verarbeitet werden können und unmittelbar nach dem Druckvorgang durch Einwirkung von UV-Strahlen aushärten. Um den Anforderungen an Behälter- oder Deckelbänder hinsichtlich der Formungsfähigkeit, Sterilisierungsfestigkeit und Hitzebeständigkeit genügen zu können, werden die Grundlacke so modifiziert, daß eine ausreichende Haftfestigkeit zwischen den schnellhärtenden UV-Lacken und den Grundlacken erreicht werden kann. Hierzu wird vorgeschlagen, dem Grundlack bis zu 15% eines Celluloseesters zuzusetzen. Auf diese Weise wird erreicht, daß die Haftfestigkeit zwischen UV-Lack und Grundlack derart verbessert wird, daß die Anforderungen an lackierte Behälter- oder Deckelbänder erfüllt werden können.

Die Haftfestigkeit zwischen UV-Lack und Grundlack wird besonders verbessert, wenn dem Grundlack 0,1 bis 5 Gew.-%, insbesondere 0,5 bis 3,5 Gew.-%, eines Celluloseesters zugesetzt werden. Dabei haben sich insbesondere folgende Celluloseester als besonders geeignet bewiesen:
1. Celluloseacetatbutyrat
mit vornehmlich folgender Charakteristik:

| | |
|---|---|
| Acetylgehalt | 2 - 29,5% |
| Butyrylgehalt | 17 - 53% |
| Hydroxylgehalt | 0,8 - 4,8% |
| Viskosität (nach ASTM D817) | 0,038 - 76 Poise |
| Tukon-Härte Knoops (nach ASTM D1474) | 14 - 27 |
| Glasübergangstemp. Tg, °C | 85 - 161 |
| Gewicht/Volumen kg/l | 1,16 - 1,26 |
| Molekulargewicht MWn | 16.000 - 70.000 |
| Zugabe | 0,1 bis 15 Gew.-% |

2. Celluloseacetatpropionat
mit vornehmlich folgender Charakteristik:

| | |
|---|---|
| Acetylgehalt | 0,6 - 2,5% |
| Propionylgehalt | 42,5 - 46% |
| Hydroxylgehalt | 1,8 - 5% |
| Viskosität (nach ASTM D817) | 0,76 - 76 Poise |
| Tukon-Härte | |
| Knoops (nach ASTM D1474) | 20 - 23 |
| Glasübergangstemp. Tg, °C | 142 - 159 |
| Gewicht/Volumen kg/l | 1,22 - 1,26 |
| Molekulargewicht MWn | 15.000 - 75.000 |
| Zugabe | 0,1 - 10% Gew.-% |

3. Celluloseacetat
mit vornehmlich folgender Charakteristik:

| | |
|---|---|
| Acetylgehalt | 39,5 - 39,8% |
| Gesamtessigsäuregehalt | 55,0 - 55,5% |
| Hydroxylgehalt | 3,5 - 4,0% |
| Viskosität (nach ASTM D817) | 11,4 - 228 Poise |
| Tukon-Härte | |
| Knoops (nach ASTM D1474) | 26 - 27 |
| Glasübergangstemp. Tg, °C | 180 - 189 |
| Gewicht/Volumen kg/l | 1,31 - 1,32 |
| Molekulargewicht MWn | 30.000 - 60.000 |
| Zugabe | 0,1 - 5 Gew.-% |

Generell lassen sich allen denkbaren als Grundlack verwendeten, kunstharzgebundenen Lacksystemen Celluloseester als Haftverbesserer zwischen dem Grundlack und einer UV-Lack-Bedruckung zusetzen, insbesondere eignen sich hierfür Einbrennlacke auf Epoxidharz- oder Polyesterbasis, wie beispielsweise Epoxidharz mit eingebauten Phenolharzanteilen, Epoxidharz mit Bortrifluorid-Zusätzen oder Epoxidharz mit Amin- oder Addukthärtern. Die Verbesserung der Haftfestigkeit durch erfindungsgemäße Celluloseesterzusätze zum Grundlack ist gegenüber allen bekannten UV-Druckfarben wirksam, d.h. sowohl bei radikalisch polymerisierenden als auch bei kationisch polymerisierenden Systemen, sowie bei Hybridsystemen.

Bei der Herstellung von Behälter- und Deckelbandmaterialien für Verpackungsbehälter können unterschiedliche Druckverfahren zum Aufbringen der UV-Lacke verwendet werden. Insbesondere eignen sich hierfür Verfahren wie Rollenoffset, Formateoffset, Flexodruck oder Siebdruck und UV-Tiefdruck. Durch die Verwendung derartiger Druckverfahren können kurze Produktionszeiten erreicht werden, da die Aushärtungs- und Wärmebehandlungszeiten, die bei der Verwendung von Zweikomponentendruckfarben oder Einkomponentendruckfarben mit Zweikomponenten-Überlackierung erforderlich sind, entfallen. Die Herstellung derartiger Druckformen, wie beispielsweise Formatoffsetformen, verringert sich gegenüber der Herstellung von Tiefdruckformen, wie sie nach dem Stand der Technik verwendet werden, von ca. 1 bis 2 Wochen auf ca. 1 Stunde. Damit ist die Herstellung derartiger Druckformen auch mit deutlich geringeren Kosten verbunden, was eine flexible Produktion auch für kleine Lose ermöglicht.

Zur Herstellung von Behälterunterteilen und/oder Deckeln für Verpackungsbehälter, beispielsweise für sterilisierte Nahrungsprodukte, wird auf Banämaterial, wie beispielsweise Aluminiumband, zunächst ein Grundlack aufgetragen, dem bis zu 15% eines Celluloseesters zugesetzt sind. Auf diesen Grundlack werden dann beispielsweise im Offset- oder Flexodruckverfahren UV-Druckfarben aufgetragen, die anschließend durch UV-Strahlen ausgehärtet werden. So können Verbraucherinformationen und werbewirksame Designerelemente auf den späteren Außenflächen der Verpackungsbehälter zur Geltung gebracht werden. Alternativ kann der Grundlack auch mit Elektronenstrahl-härtenden Druckfarben (ESH-Farben) bedruckt werden, die dann durch Elektronenstrahlen ausgehärtet werden.

Anschließend werden die Behälterunterteile oder Deckel aus dem Bandmaterial ausgestanzt und ggf. in einem Tiefziehprozeß weiterverarbeitet. Die so entstandenen Verpackungsbehälter zeichnen sich durch kurze Fertigungszeiten, preisgünstige Druckformherstellung und hohe Flexibilität des gesamten Herstellungsprozesses aus, wodurch eine wirtschaftliche Fertigung auch kleinerer Fertigungslose möglich ist.

## Patentansprüche

1. Bandmaterial, insbesondere für die Behälterfertigung, das mit einem Einbrennlack als Grundlack und darauf einer UV-Bedruckung oder ESH-Bedruckung beschichtet ist, **dadurch gekennzeichnet, daß** dem Grundlack bis zu 15 Gew.-% eines Celluloseesters zugesetzt sind.

2. Bandmaterial nach Anspruch 1, **dadurch gekennzeichnet, daß** dem Grundlack zwischen 0,1 bis 5% Gew.-% Celluloseester zugesetzt sind, vorzugsweise zwischen 0,5 und 3,5 Gew.-%.

3. Bandmaterial nach einem der Ansprüche 1 oder 2, **dadurch gekennzeichnet, daß** der Celluloseester aus der Gruppe der Celluloseacetatbutyrate, der Celluloseacetatpropionate oder der Celluloseacetate gewählt ist.

4. Bandmaterial nach Anspruch 3, **dadurch gekennzeichnet, daß** das Celluloseacetatbutyrat einen Acetylgehalt zwischen 2 und 29,5%, einen Butyrylgehalt von 17 bis 53% und einen Hydroxylgehalt von 0,8 bis 4,8% aufweist.

5. Bandmaterial nach Anspruch 3, **dadurch gekennzeichnet, daß** das Celluloseacetatproprionat einen Acetylgehalt von 0,6 bis 2,5%, einen Propionylgehalt von 42,5 bis 46% und einen Hydroxylgehalt von 1,8 bis 5% aufweist.

6. Bandmaterial nach Anspruch 3, **dadurch gekennzeichnet, daß** das Celluloseacetat einen Acetylgehalt von 39,5 bis 39,8%, einen Gesamtessigsäuregehalt von 55,0 bis 55,5% und einen Hydroxylgehalt von 3,5 bis 4% aufweist.

7. Bandmaterial nach zumindest einem der vorangegangenen Ansprüche, **dadurch gekennzeichnet, daß** das Bandmaterial aus Aluminium oder einer Aluminiumlegierung besteht.

8. Bandmaterial nach zumindest einem der Ansprüche 1 bis 6, **dadurch gekennzeichnet, daß** das Bandmaterial aus Eisen oder einer Eisenlegierung besteht.

9. Verpackungsbehälter, der aus Bandmaterial ausgestanzt und/oder tiefgezogen ist, **dadurch gekennzeichnet, daß** der Behälter aus einem sterilisier- und siegelfähigen Bandmaterial nach zumindest einem der Ansprüche 1 bis 8 besteht.

10. Verpackungsbehälter nach Anspruch 9, **dadurch gekennzeichnet, daß** der Behälter aus einem tiefgezogenen halbstarren Behälterunterteil und einem darauf aufgebrachten Deckel besteht.

11. Verfahren zur Herstellung eines Verpackungsbehälters nach einem der Ansprüche 9 oder 10, das folgendes umfaßt:
- Beschichten eines Bandmaterials mit einem Grundlack, dem bis zu 15 Gew.-% eines Celluloseesters zugesetzt sind,
- Bedrucken des mit dem Grundlack beschichteten Bandmaterials mit einer UV-Druckfarbe oder einer ESH-Druckfarbe,
- Strahlenhärten der Lackbedruckung,
- Ausstanzen eines Zuschnittes für ein Behälterunterteil und eines Deckels aus zumindest einem beschichteten Bandmaterial,
- Tiefziehen des Behälterunterteils,
- Befüllen des Behälterunterteils,
- Aufbringen des Deckels auf das Behälterunterteil, und
- Sterilisierungsbehandlung.

12. Verfahren nach Anspruch 11, **dadurch gekennzeichnet, daß** der Grundlack zwischen 0,1 und 5 Gew.-%, bevorzugt 0,5 bis 3,5 Gew.-%, eines Celluloseesters enthält.

13. Verfahren nach einem der Ansprüche 11 oder 12, **dadurch gekennzeichnet, daß** der Celluloseester aus der Gruppe der Celluloseacetatbutyrate, der Celluloseacetatpropionate oder der Celluloseacetate gewählt ist.

14. Verfahren nach einem der Ansprüche 11 bis 13, **dadurch gekennzeichnet, daß** der Grundlack ein Einbrennlack auf Epoxidharz- oder Polyesterbasis ist.

15. Verfahren nach einem der Ansprüche 11 bis 13, **dadurch gekennzeichnet, daß** der Grundlack ein Zweikomponenten-Epoxidharz ist.

16. Verfahren nach einem der Ansprüche 11 bis 15, **dadurch gekennzeichnet, daß** der Grundlack mit einem der folgenden Verfahren mit UV-Druckfarben oder ESH-Druckfarben bedruckt wird:
- Rollenoffset
- Formateoffset
- Flexodruck
- Siebdruck
- Tiefdruck.

17. Verfahren nach einem der Ansprüche 11 bis 16, **dadurch gekennzeichnet, daß** der Deckel auf dem Behälterunterteil durch Randversiegelung aufgebracht wird.

## Claims

1. Strip material, in particular for container manufacture, coated with a stoving enamel as primer and UV printing or EBC printing thereon, **characterized in that** up to 15 wt.% of a cellulose ester have been added to the primer.

2. Strip material according to Claim 1, **characterized in that** between 0.1 and 5 wt.% of cellulose ester, preferably between 0.5 and 3.5 wt.%, are added to the primer.

3. Strip material according to either Claim 1 or 2, **characterized in that** the cellulose ester is selected from the group comprising the cellulose acetate butyrates, the cellulose acetate propionates or the cellulose acetates.

4. Strip material according to Claim 3, **characterized in that** the cellulose acetate butyrate has an acetyl content of between 2 and 29.5 %, a butyryl content of 17 to 53 % and a hydroxyl content of 0,8 to 4.8 %.

5. Strip material according to Claim 3, **characterized in that** the cellulose acetate propionate has an acetyl content of 0.6 to 2.5 %, a propionyl content of 42.5 to 46 % and a hydroxyl content of 1.8 to 5 %.

6. Strip material according to Claim 3, **characterized in that** the cellulose acetate has an acetyl content of 39.5 to 39.8 %, a total acetic acid content of 55.0 to 55.5 % and a hydroxyl content of 3.5 to 4 %.

7. Strip material according to at least one of the preceding claims, **characterized in that** the strip material is composed of aluminium or an aluminium alloy.

8. Strip material according to at least one of Claims 1 to 6, **characterized in that** the strip material is composed of iron or an iron alloy.

9. Packaging container that is punched and/or deep-drawn from strip material, **characterized in that** the container comprises a sterilizable and sealable strip material according to at least one of Claims 1 to 8.

10. Packaging container according to Claim 9, **characterized in** the container comprises a deep-drawn semi-rigid container lower part and a lid fitted thereto.

11. Method of producing a packaging container according to any one of Claims 9 or 10 that comprises the following steps:
- coating of a strip material with a primer to which up to 15 wt:% of a cellulose ester has been added,
- imprinting of the strip material coated with the primer with a UV printing ink or an EBC printing ink,
- radiation curing of the enamel printing,
- punching of a blank for a container lower part and a lid out of at least one coated strip material,
- deep-drawing of the container lower part,
- filling of the container lower part,
- fitting of the lid on the container lower part, and
- sterilization treatment.

12. Method according to Claim 11, **characterized in that** the primer contains between 0.1 and 5 wt.%, preferably 0.5 and 3.5 wt.%, of a cellulose ester.

13. Method according to any one of Claims 11 or 12, **characterized in that** the cellulose ester is selected from the group comprising the cellulose acetate butyrates, the cellulose acetate propionates or the cellulose acetates.

14. Method according to any one of Claims 11 to 13, **characterized in that** the primer is a stoving enamel having an epoxy-resin or polyester base.

15. Method according to any one of Claims 11 to 13, **characterized in that** the primer is a two-component epoxy resin.

16. Method according to any one of Claims 11 to 15, **characterized in that** the primer is imprinted with UV printing inks or EBC printing inks by one of the following methods:
- rotary offset printing,
- sheet offset printing,
- flexographic printing,
- screen printing,
- gravure printing.

17. Method according to any one of Claims 11 to 16, **characterized in that** the lid is fitted to the container lower part by rim sealing.

## Revendications

1. Matériau en bande, utilisable en particulier pour la fabrication de récipients, qui est revêtu d'un vernis au four comme vernis de fond portant une impression UV ou impression durcissable par faisceau d'électrons, **caractérisé en ce qu'**un ester de cellulose est ajouté au vernis de fond en une proportion allant jusqu'à 15 % en poids.

2. Matériau en bande suivant la revendication 1, **caractérisé en ce qu'**un ester de cellulose est ajouté au vernis de fond en une proportion comprise entre 0,1 et 5 % en poids, avantageusement entre 0,5 et 3,5 % en poids.

3. Matériau en bande suivant l'une des revendications 1 et 2, **caractérisé en ce que** l'ester de cellulose est choisi dans le groupe des acétobutyrates de cellulose, des acétopropionates de cellulose et des acétates de cellulose.

4. Matériau en bande suivant la revendication 3, **caractérisé en ce que** l'acétobutyrate de cellulose présente une teneur en acétyle comprise entre 2 et 29,5 %, une teneur en butyryle de 17 à 53 % et une teneur en hydroxyle de 0,8 à 4,8 %.

5. Matériau en bande suivant la revendication 3, **caractérisé en ce que** l'acétopropionate de cellulose présente une teneur en acétyle de 0,6 à 2,5 %, une teneur en propionyle de 42,5 à 46 % et une teneur en hydroxyle de 1,8 à 5 %.

6. Matériau en bande suivant la revendication 3, **caractérisé en ce que** l'acétate de cellulose présente une teneur en acétyle de 39,5 à 39,8 %, une teneur totale en acide acétique de 55,0 à 55,5 % et une teneur en hydroxyle de 3,5 à 4 %.

7. Matériau en bande suivant au moins l'une des revendications précédentes, **caractérisé en ce qu'**il est constitué d'aluminium ou d'un alliage d'aluminium.

8. Matériau en bande suivant au moins l'une des revendications 1 à 6, **caractérisé en ce qu'**il est constitué de fer ou d'un alliage de fer.

9. Récipient d'emballage formé par estampage et/ou par emboutissage de matière en bande, **caractérisé en ce qu'**il est constitué d'un matériau en bande apte à la stérilisation et au scellement, suivant au moins l'une des revendications 1 à 8.

10. Récipient d'emballage suivant la revendication 9, **caractérisé en ce qu'**il est constitué d'une partie inférieure emboutie semi-rigide sur laquelle un couvercle est disposé.

11. Procédé de fabrication d'un récipient d'emballage suivant l'une des revendications 9 et 10, qui comprend les opérations suivantes, consistant :
- à revêtir un matériau en bande d'un vernis de fond, auquel est ajouté un ester de cellulose en une proportion allant jusqu'à 15 % en poids,
- à imprimer le matériau en bande revêtu du vernis de fond avec une encre d'impression UV ou une encre d'impression durcissable par faisceau d'électrons,
- à durcir par irradiation l'impression formée sur le vernis,
- à estamper un tronçon pour former une partie inférieure de récipient et estamper un couvercle à partir d'au moins un matériau en bande revêtu,
- à emboutir la partie inférieure de récipient,
- à charger la partie inférieure de récipient,
- à mettre en place le couvercle sur la partie inférieure de récipient, et
- à effectuer un traitement de stérilisation.

12. Procédé suivant la revendication 11, **caractérisé en ce que** le vernis de fond contient entre 0,1 et 5 % en poids, avantageusement de 0,5 à 3,5 % en poids, d'un ester de cellulose.

13. Procédé suivant l'une des revendications 11 et 12, **caractérisé en ce que** l'ester de cellulose est choisi dans le groupe des acétobutyrates de cellulose, des acétopropionates de cellulose et des acétates de cellulose.

14. Procédé selon l'une des revendications 11 à 13, **caractérisé en ce que** le vernis de fond est un vernis au four à base de résine époxy ou de polyester.

15. Procédé selon l'une dès revendications 11 à 13, **caractérisé en ce que** le vernis de fond est une résine époxy à deux composants.

16. Procédé selon l'une des revendications 11 à 15, **caractérisé en ce que** le vernis de fond est imprimé par l'un des procédés suivants avec des encres d'impression UV ou des encres d'impression durcissables par faisceau d'électrons :
- offset à bobines
- offset au format
- flexographie
- sérigraphie
- impression en creux.

17. Procédé suivant l'une des revendications 11 à 16, **caractérisé en ce que** le couvercle est adapté sur la partie inférieure du récipient par scellement des bords.
